# DEMANDE DE BREVET EUROPEEN

(11) **EP 0 730 140 A2**
(43) Date de publication de la demande: **04.09.1996**
(21) Numéro de dépôt: 96810013.1
(22) Date de dépôt: 09.01.1996
(51) Int. Cl.: G01G 19/08, G01F 23/36

(54) **Dispositif indicateur de charge pour véhicule**

(30) Priorité: 19.03.1991 CH 821/91; 09.04.1991 CH 1107/91; 09.04.1991 CH 1108/91
(62) Demande divisionnaire de: 91119707.7
(71) Demandeur: Riedo, Luc, CH-1800 Vevey (CH)
(72) Inventeur: Riedo, Luc, CH-1800 Vevey (CH)
(74) Mandataire: Dietlin, Henri

(57) **Abrégé**

Le dispositif comprend des vérins hydrauliques (2) reliés à un réservoir (1) par l'intermédiaire de conduites (3), des vérins (2) déplaçant un liquide incompressible vers le réservoir en fonction du fléchissement de la suspension. La variation de niveau du liquide dans le réservoir (1) actionne un flotteur rotatif (5) commandant un indicateur de charge (4) par l'intermédiaire d'un balai d'un rhéostat (7).

## Description

La présente invention a pour objet un dispositif indicateur de charge pour véhicule, comprenant des vérins placés entre des parties fixes, respectivement mobiles d'une suspension et reliés à un instrument de mesure par un circuit de conduite.

Le brevet français No 1 353 831, de même que le brevet autrichien No 327 583 décrivent tous deux un dispositif pour l'indication d'une charge dans un véhicule, notamment un véhicule automobile. Dans les deux documents, on retrouve une installation hydraulique qui comprend des vérins reliés à un réservoir par l'intermédiaire de conduites hydrauliques. Dans le brevet français, l'indicateur de l'état de charge comprend un cylindre à l'intérieur duquel coulisse un piston entraînant un index se déplaçant le long d'une échelle indicatrice. L'indicateur est surmonté d'un réservoir de liquide présentant à son extrémité inférieure une vanne de fermeture utilisée pour la mise à zéro du système lorsque le véhicule n'est pas chargé. Les vérins déplaçant le liquide vers l'indicateur sont reliés au dit indicateur par une conduite commune qui n'est pas en contact avec le réservoir lorsque la vanne de fermeture est fermée. Dans le dispositif décrit dans le brevet autrichien No 327 583, les conduites aboutissent simplement à un réservoir muni d'une fenêtre de lecture.

Dans le brevet US No 4 375 839 est décrit un dispositif de mesure pour l'estimation du poids d'un véhicule dans lequel un cylindre se déplace dans un deuxième cylindre contenant un liquide conducteur, le deuxième cylindre comportant à différents niveaux des capteurs reliés à des diodes émettrices de lumière. En fonctionnement, le premier cylindre fait monter le niveau de liquide et rend ainsi conducteur l'un après l'autre la succession de capteurs en indiquant ainsi selon l'exemple donné un remplissage du cylindre allant d'un premier quart à un deuxième quart et un troisième quart pour atteindre un niveau correspondant à la pleine charge.

Le dispositif indicateur de charge selon l'invention est caractérisé en ce que les vérins travaillent par aspiration en déplaçant le liquide du réservoir vers leur cylindre, l'indication de charge étant donnée par une diminution du niveau du liquide dans le réservoir.

Un vérin est prévu à chaque suspension. En particulier pour chaque essieu fixe d'un véhicule il est prévu deux vérins.

La forme intérieure des vérins peut être adaptée en fonction de la distance de travail ou du fléchissement de la suspension.

Dans un mode d'exécution préféré, deux vérins hydrauliques sont reliés à un réservoir par l'intermédiaire de conduites, les vérins déplaçant un liquide incompressible entre le réservoir et eux-mêmes en fonction du fléchissement de la suspension, le réservoir étant monté sur pivot dans les deux sens, de manière à ce que le liquide du réservoir soit toujours de niveau. La variation du niveau du liquide dans le réservoir actionne un flotteur commandant un indicateur de charge. Les vérins travaillent par aspiration en déplaçant le liquide du réservoir vers le cylindre en fonction du fléchissement de la suspension, l'indication de la charge étant donnée par une diminution de niveau du liquide dans le réservoir.

Le dessin représente, à titre d'exemples, un mode d'exécution ainsi qu'une variante d'un dispositif indicateur de charge pour véhicule selon l'invention.

Dans le dessin :
la figure 1 représente une vue schématique du mode d'exécution d'un dispositif indicateur de charge
la figure 2 représente une vue d'un composant du dispositif de la figure 1.

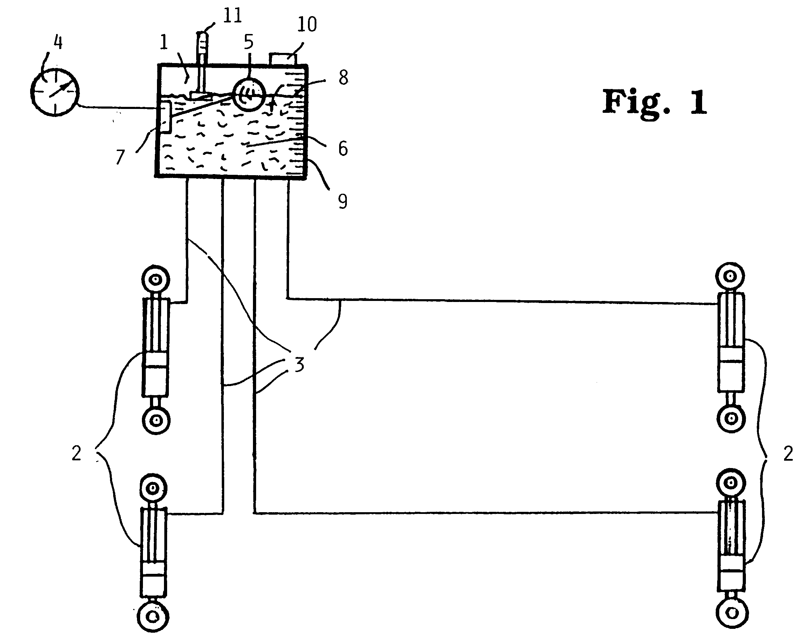

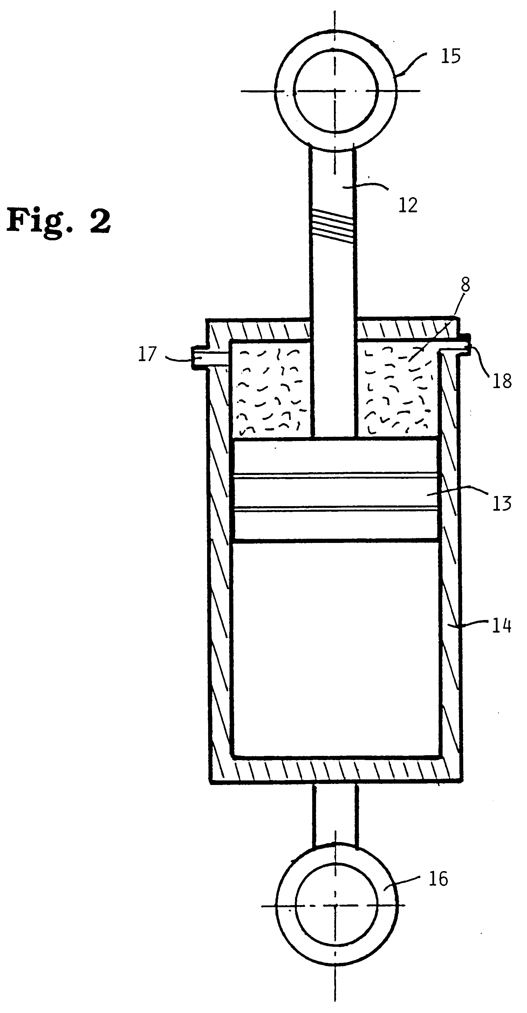

Le dispositif représenté dans les figures 1 et 2, fonctionne par aspiration du liquide contenu dans le réservoir. Ainsi un réservoir plein correspond à un état de charge zéro. Au fur et à mesure que l'état de charge du véhicule augmente, le liquide est aspiré par les vérins 2 et le niveau de liquide dans le réservoir 1 baisse. Les vérins 2, dont les pistons 13 (figure 2)avec segments ou joints d'étanchéité sont actionnés dans le sens du travail des suspensions sur lesquelles ils sont montés. Le point d'attache 16 est monté sur la partie fixe des suspensions, c'est-à-dire sur l'essieu des roues du véhicule tandis que le point d'attache 15 est monté sur la partie mobile des suspensions. Chaque vérin 2 comprend une embouchure de purge du liquide 18 et une embouchure de communication 17 liée à une conduite hydraulique correspondante 3. Chacune des conduites 3 (figure 1) débouche dans le réservoir 1 placé sur une partie haute du véhicule et qui permet la communication du liquide 6 avec toutes les conduites. Comme représenté dans le dessin, le réservoir est constitué d'un seul compartiment permettant la communication de toutes les conduites. Il possède un flotteur rotatif 5 donnant une information de la charge en fonction du niveau du liquide du réservoir 1 par le biais d'un balai d'un rhéostat 7, information convertie électriquement par un indicateur de charge 4 placé sur le tableau de bord du véhicule. Le réservoir possède également un autre flotteur solidaire d'une tige graduée 11 et débouchant sur la partie supérieure pour donner une indication visuelle mécaniquement de l'état de charge. Il comprend également un bouchon de remplissage 10 par lequel on peut le compléter en liquide 6 après montage de l'installation hydraulique pour équilibrer le dispositif suivant le type de véhicule utilisé. Le bouchon 10 possède des trous d'aération pour avoir une pression de gaz contenue dans le réservoir toujours égale et des moyens anti-jets empêchant au liquide 6 de sortir du réservoir 1. Ces trous d'aération et moyens anti-jets ne sont pas représentés dans le dessin. Le réservoir 1 a une fenêtre graduée 8, 9 sur un de ses côtés afin d'observer le niveau du liquide. Il est à noter que l'équilibrage du dispositif peut se faire également par l'embouchure de purge 18 de chaque vérin.

Le réservoir 1 de l'installation hydraulique peut être construit de différentes matières, incorporant la fenêtre graduée 8,9 transparente. Les conduites hydrauliques peuvent également être réalisées à partir de différentes matières susceptibles de ne pas se déformer en fonction de la pression du liquide qu'elles conduisent.

Un témoin est placé sur la partie inférieure du réservoir 1 afin d'indiquer lorsque le réservoir 1 n'a pas assez de liquide 6 et qu'il est nécessaire d'en rajouter par le bouchon de remplissage 10.

Le dispositif peut être monté sur n'importe quel véhicule ou remorque. Le véhicule peut se trouver à n'importe quel niveau de charge pour la lecture du poids de charge, étant entendu que c'est le débit liquide qui fait foi, les cylindres où il y a plus d'inclinaison aspirant davantage de liquide que les cylindres où il y a peu d'inclinaison. Si l'inclinaison est plus forte sur un des côtés de la suspension, c'est le liquide aspiré par le cylindre correspondant qui descendra du réservoir 1 par l'intermédiaire de la conduite correspondante.

Par ces faits la lecture est instantanée au réservoir à n'importe quel niveau de charge du véhicule. Le réservoir 1 est monté le plus haut possible de ce dispositif et la fixation sur pivots dans les deux sens permet de maintenir ce dernier toujours de niveau pour la lecture du poids de charge. Le réservoir est monté avec graduations visibles depuis l'extérieur et il peut être construit avec différentes matières, pourvu que les graduations soient lisibles et que le voyant montre le niveau du liquide. Les cylindres et pistons peuvent être dans n'importe quel niveau et forme, pourvu que la partie fixe puisse travailler dans la partie mobile. Les pistons sont étanchéifiés au moyen de segments ou par des joints. Dans le réservoir, le système électrique 7 comprenant le flotteur pivotant 5 avec un balai sur un rhéostat fixe indique le poids de charge sur un cadran 4 fixé sur le tableau de bord du véhicule. Alternativement la tige flottante 11 verticale graduée avec un guide fixe et muni d'un système flottant à la base permet de lire la charge depuis l'extérieur. Pour les véhicules qui ont plus de deux essieux, il faudra monter deux cylindres supplémentaires par essieu. Pour des véhicules à suspension indépendante, il faudra monter un cylindre à chaque suspension. Pour les véhicules où il n'y a pas de place pour la fixation du réservoir, on peut fabriquer un cadre pivotant dans lequel viendra se fixer le réservoir. Les moyens pivotants doivent travailler dans les deux sens.

Le bouchon de remplissage 10 avec ses trous d'aération et sa protection anti-jets permet d'éviter des pertes de liquide pour le cas d'un brusque retour de liquide dans le réservoir. La tige 11 peut se monter sur des réservoirs non gradués et indique les poids de charge au moyen de sa propre graduation, la tige coulissant au moyen d'un guide. La tige en question est en matière plus légère que le liquide, ou dispose à son extrémité inférieure d'un système de flotteur qui lui permet de coulisser. Par ce moyen on peut lire directement sur le dépassement supérieur du réservoir le poids de la charge, ce qui est particulièrement approprié pour les wagons de chemin de fers.

Dans le cas d'un véhicule dont les dimensions ne permettraient pas des modifications des cylindres, on peut diminuer ou augmenter le volume intérieur du réservoir avec graduations. Les fixations des têtes et pistons peuvent être multiformes pourvu que lesdits fixations soient robustes et précises.

Il est évident pour l'homme du métier que l'on peut prévoir un dispositif hydraulique combinant ce système par aspiration avec d'autres systèmes par pression qui font partie de l'art antérieur.

Le tarage du dispositif qui vient d'être décrit pour le poids de la charge se fait au moment du montage avec les tiges 12 des pistons (figure 2). Les cylindres se montent à la partie fixe et les tiges de pistons à la partie mobile de la suspension ou vice versa.

## Revendications

1. Dispositif indicateur de charge d'un véhicule, comprenant des vérins hydrauliques placés entre les parties fixes, respectivement mobiles d'une suspension et reliés à un instrument de mesure, en l'occurrence un réservoir, par l'intermédiaire de conduites, les vérins déplaçant un liquide incompressible entre eux-mêmes et le réservoir en fonction du fléchissement de la suspension, le réservoir étant monté sur des pivots dans les deux sens, de manière à ce que le liquide du réservoir soit toujours a niveau, caractérisé en ce que les vérins travaillent par aspiration en déplaçant le liquide du réservoir vers leur cylindre, l'indication de charge étant donnée par une diminution du niveau du liquide dans le réservoir.

2. Dispositif selon la revendication 1, caractérisé en ce qu'un vérin (2) est prévu à chaque suspension.

3. Dispositif selon la revendication 1, caractérisé en ce que deux vérins (2) sont prévus pour chaque essieu du véhicule.

4. Dispositif selon la revendication 1, caractérisé en ce que la forme intérieure des vérins est adaptée en fonction de la distance de travail ou du fléchissement de la suspension.

5. Dispositif selon la revendication 1, caractérisé en ce qu'un bouchon de remplissage (10) du réservoir (1) présente des trous d'aération et un système anti-jets.

6. Dispositif selon la revendication 1, caractérisé en ce que le réservoir supporte un indicateur de charge mécanique se présentant sous forme d'une tige graduée (11) surmontant un flotteur (5).

7. Dispositif selon la revendication 1, caractérisé en ce qu'il comprend en combinaison un système pour pression de l'art antérieur.
